# FASCICULE DE BREVET EUROPEEN

(11) **EP 2 891 590 B1**
(45) Date de publication et mention de la délivrance du brevet: **01.05.2019**
(21) Numéro de dépôt: 14197347.9
(22) Date de dépôt: 11.12.2014
(51) Int. Cl.: B61F 9/00

(54) **Véhicule terrestre guidé comprenant un dispositif de gestion d'un déraillement du véhicule , et procédé de gestion du déraillement associé**
Gelenktes Landfahrzeug, das eine Steuerungsvorrichtung beim Entgleisen des Fahrzeugs umfasst, und entsprechendes Steuerungsverfahren der Entgleisung
Guided land vehicle including a device for managing a derailment of the vehicle, and related method for managing the derailment

(30) Priorité: 11.12.2013 FR 1362420
(43) Date de publication de la demande: 08.07.2015
(73) Titulaire: ALSTOM Transport Technologies, 93400 Saint-Ouen (FR)
(72) Inventeur: Flamanc, Emmanuel, 78390 BOIS D'ARCY (FR)
(74) Mandataire: Lavoix

(56) Documents cités:
- EP-A1- 2 253 523
- WO-A1-93/10995
- FR-A1- 2 909 061
- FR-A1- 2 923 913

## Description

La présente invention concerne un procédé de gestion d'un déraillement d'un véhicule terrestre guidé circulant sur une voie, la voie comportant un rail d'alimentation électrique du véhicule par le sol, le rail comprenant une pluralité de circuits électriques, chaque circuit électrique étant relié à au moins un organe de commutation électrique.

Le procédé est mis en oeuvre par un dispositif embarqué au sein du véhicule, le dispositif comprenant des moyens de détection du déraillement du véhicule terrestre et des moyens de traitement reliés aux moyens de détection, le véhicule comprenant des moyens de génération d'un signal de commande du ou d'un des organe(s) de commutation électrique relié(s) à l'un du ou des circuits électriques disposés en regard du véhicule terrestre, pour la fermeture dudit circuit électrique, les moyens de génération étant reliés aux moyens de traitement.

Le procédé comprend une étape de détection, par les moyens de détection, du déraillement du véhicule terrestre.

On entend par véhicule guidé un véhicule guidé soit par le rail d'alimentation, soit par des rails de roulement du véhicule, ou soit guidé librement par un conducteur pour positionner le véhicule au-dessus d'un rail d'alimentation. On entend par déraillement le fait que le véhicule déraille ou bien soit désaxé par rapport au rail d'alimentation.

La présente invention concerne également un véhicule terrestre guidé propre à circuler sur une voie, le véhicule comprenant un dispositif de gestion d'un déraillement du véhicule mettant en oeuvre un tel procédé.

La présente invention concerne également un ensemble comprenant une pluralité de tels véhicules terrestres guidés.

Le domaine de l'invention est celui des véhicules terrestres guidés, en particulier celui des tramways prévus pour circuler sur des voies ferrées en zone urbaine.

On connait un procédé de gestion d'un déraillement d'un véhicule terrestre guidé circulant sur une voie. La voie comporte un rail d'alimentation électrique du véhicule par le sol. Le rail comprend plusieurs circuits électriques, chaque circuit électrique étant relié à au moins un organe de commutation électrique. A tout instant, au moins un des circuits électriques disposés en regard du véhicule est fermé, permettant une conduction électrique au sein de ce circuit. En cas de déraillement du véhicule, le conducteur du véhicule appuie sur un organe d'actionnement d'un freinage d'urgence du véhicule. Un tel procédé de gestion, mettant en oeuvre une détection « manuelle » du déraillement, n'est toutefois pas fiable. En effet, le conducteur du véhicule est susceptible d'être blessé et/ou inconscient à la suite du déraillement, le conducteur devenant alors incapable d'appuyer sur l'organe d'actionnement.

Pour palier ce problème, on connait du document EP 2 253 523 A1 un véhicule ferroviaire comprenant un dispositif de gestion d'un déraillement du véhicule mettant en oeuvre un procédé du type précité. Les moyens de détection du déraillement comprennent un organe de mesure d'une distance entre un dispositif de freinage du véhicule et un des rails de la voie. Le procédé comprend, à la suite de l'étape de détection du déraillement, une étape d'activation d'une alarme et/ou d'un freinage d'urgence si la distance mesurée se trouve en-dehors d'une plage de sécurité prédéterminée.

WO 93/10995 A1 décrit un système d'alimentation électrique par le sol d'un véhicule terrestre qui est en contact avec des segments d'un rail électrifié. Le véhicule comporte des moyens permettant de commander à distance l'alimentation des segments, afin que les segments correspondants soient alimentés avant l'arrivée du véhicule.

Toutefois, dans le cas d'un véhicule terrestre guidé, alimenté électriquement par le sol, la mise en oeuvre d'un tel procédé n'est pas adaptée et engendre des risques pour des piétons se trouvant à proximité de la voie.

Un but de l'invention est donc de proposer un procédé de gestion d'un déraillement d'un véhicule terrestre guidé permettant d'améliorer la sécurité de piétons se trouvant à proximité de la voie lors d'un déraillement du véhicule, tout en assurant une détection fiable du déraillement.

À cet effet, l'invention a pour objet un procédé de gestion d'un déraillement du type précité, dans lequel le procédé comprend en outre, suite à la détection du déraillement du véhicule par les moyens de détection, une étape de désactivation, par les moyens de traitement, des moyens de génération, de sorte à inhiber la génération du signal de commande, afin de provoquer l'ouverture du ou des circuits en regard du véhicule.

Suivant d'autres aspects avantageux de l'invention, le procédé de gestion d'un déraillement comprend une ou plusieurs des caractéristiques suivantes, prises isolément ou suivant toutes les combinaisons techniquement possibles :
- les moyens de génération comprennent au moins une antenne d'émission du signal de commande et un module d'alimentation électrique de l'antenne, et lors de l'étape de désactivation, les moyens de traitement sont propres à générer un signal de commande d'arrêt du module d'alimentation électrique ;
- le véhicule comporte des moyens d'alerte visuelle et/ou sonore à l'intérieur et/ou à l'extérieur du véhicule, reliés aux moyens de traitement, et le procédé comprend en outre une étape de génération, par les moyens de traitement, d'un signal de commande desdits moyens d'alerte, et de transmission dudit signal aux moyens d'alerte suite à la détection du déraillement du véhicule ;

- le véhicule comporte des moyens de freinage du véhicule, reliés aux moyens de traitement, et le procédé comprend en outre une étape de génération, par les moyens de traitement, d'un signal de commande de freinage, l'étape de génération d'un signal de commande de freinage étant effectuée après l'étape de génération d'un signal de commande des moyens d'alerte visuelle et/ou sonore à l'intérieur du véhicule ;
- le véhicule comporte des moyens de stockage d'énergie électrique, reliés aux moyens de traitement, et le procédé comprend en outre une étape de génération, par les moyens de traitement, d'un signal de commande de déchargement de l'énergie électrique contenue dans les moyens de stockage, et de transmission dudit signal aux moyens de stockage (38) suite à la détection du déraillement du véhicule ; et
- le véhicule comporte des moyens de communication, reliés aux moyens de traitement, et le procédé comprend en outre une étape d'élaboration, par les moyens de traitement, d'un message indiquant le déraillement du véhicule, et de transmission dudit message aux moyens de communication suite à la détection du déraillement du véhicule.

L'invention a également pour objet un véhicule terrestre guidé propre à circuler sur une voie, la voie comportant un rail d'alimentation électrique du véhicule par le sol, le rail comprenant une pluralité de circuits électriques, chaque circuit électrique étant relié à au moins un organe de commutation électrique,
le véhicule comprenant un dispositif de gestion d'un déraillement du véhicule et des moyens de génération d'un signal de commande du ou d'un des organe(s) de commutation électrique relié(s) à l'un du ou des circuits électriques disposés en regard du véhicule terrestre, pour la fermeture dudit circuit électrique,
le dispositif comprenant des moyens de détection du déraillement du véhicule terrestre et des moyens de traitement reliés aux moyens de détection et aux moyens de génération,
dans lequel les moyens de traitement sont propres à désactiver les moyens de génération pour inhiber la génération du signal de commande, afin de provoquer l'ouverture du ou des circuits en regard du véhicule.

Suivant un autre aspect avantageux de l'invention, le véhicule comprend la caractéristique suivante :
- le véhicule comporte des moyens de communication, reliés aux moyens de traitement, et les moyens de traitement sont propres à élaborer un message indiquant le déraillement du véhicule et à transmettre ce message aux moyens de communication, suite à la détection du déraillement du véhicule par les moyens de détection.

L'invention a également pour objet un ensemble comprenant une pluralité de véhicules terrestres guidés propres à circuler sur une voie et une installation de gestion de la circulation de chaque véhicule terrestre guidé, la voie comportant un rail d'alimentation électrique du ou de chaque véhicule par le sol, le rail comprenant une pluralité de circuits électriques, chaque circuit électrique étant relié à au moins un organe de commutation électrique, l'installation comprenant un centre de communication distant, dans lequel chaque véhicule terrestre guidé est tel que défini ci-dessus, chaque véhicule terrestre guidé étant relié au centre de communication distant via une liaison de données, les moyens de communication de chaque véhicule terrestre guidé étant propres à émettre à destination du centre de communication distant, via la liaison de données, un message indiquant le déraillement du véhicule.

Suivant d'autres aspects avantageux de l'invention, l'ensemble comprend une ou plusieurs des caractéristiques suivantes, prises isolément ou suivant toutes les combinaisons techniquement possibles :
l'installation comprend en outre une pluralité de dispositifs de signalisation, chaque dispositif de signalisation présentant un état de signalisation parmi une pluralité d'états de signalisation prédéterminés, et en ce que le centre de communication distant comporte des moyens de commande de chaque dispositif de signalisation, les moyens de commande étant propres à générer un signal de modification de l'état de signalisation d'au moins un des dispositifs de signalisation, en fonction de la réception d'un message indiquant le déraillement d'un véhicule ;
- l'installation comprend en outre un système d'alimentation électrique des circuits électriques du rail d'alimentation, et le centre de communication distant comporte des moyens de commande du système d'alimentation électrique, les moyens de commande étant propres à générer un signal de commande d'arrêt du système d'alimentation électrique, en fonction de la réception d'un message indiquant le déraillement d'un véhicule ; et
- le centre de communication distant comporte des moyens de localisation de chaque véhicule terrestre guidé, et des moyens d'émission de la localisation d'un véhicule terrestre guidé ayant déraillé, à destination des autres véhicules terrestres guidés.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique d'un ensemble comprenant plusieurs véhicules terrestres guidés selon l'invention et une installation de gestion de la circulation de chaque véhicule terrestre,
- la figure 2 est une vue schématique d'un des véhicules terrestres guidés de la figure 1,
- la figure 3 est une vue analogue à celle de la figure 2, selon une variante de réalisation,
- la figure 4 est un organigramme représentant un procédé de gestion d'un déraillement selon l'invention, et
- la figure 5 est un organigramme représentant le fonctionnement de l'installation de gestion de la figure 1, selon l'invention.

Dans le présent document, on entend par « déraillement », toute situation dans laquelle au moins une des roues du véhicule terrestre guidé n'est plus en prise stable avec un des rails de la voie. Ceci inclut par exemple une situation de déraillement complet, dans laquelle la roue est complètement dégagée du rail correspondant. Ceci inclut également une situation de déraillement partiel, dans laquelle la roue, bien qu'étant toujours en contact avec le rail correspondant, est néanmoins dans une position anormale, pouvant conduire à une situation de déraillement complet. On entend également par « déraillement » la situation dans laquelle un véhicule est désaxé par rapport au rail d'alimentation situé sous le véhicule.

Dans la suite de la description, l'expression « sensiblement égal à » définit une relation d'égalité à plus ou moins 10 %.

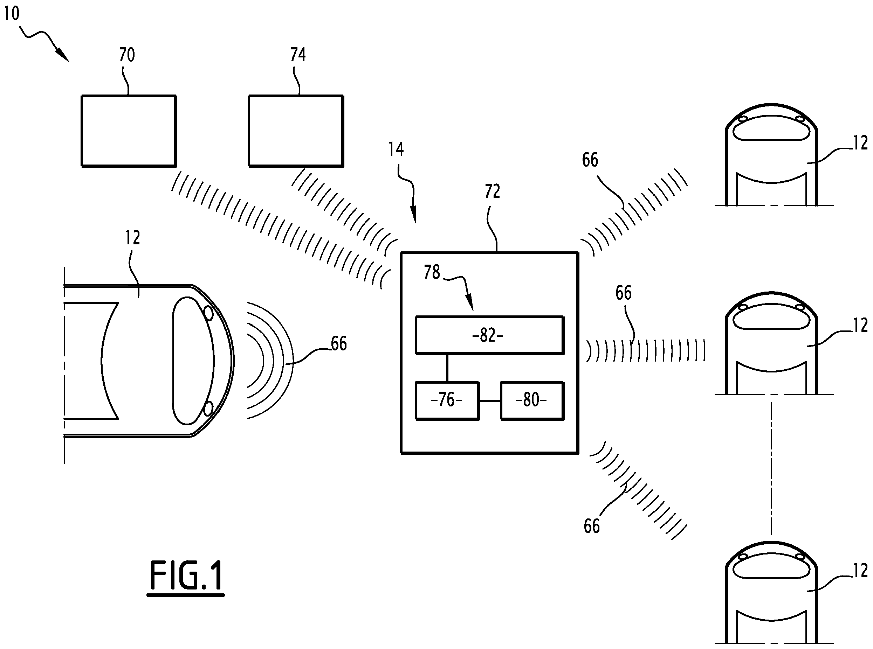

La figure 1 représente un ensemble 10 comprenant plusieurs véhicules terrestres guidés 12 et une installation 14 de gestion de la circulation de chaque véhicule terrestre guidé 12.

Dans la suite de la description, les termes « amont » et « aval » s'entendent par rapport à la direction d'avancement de chaque véhicule 12.

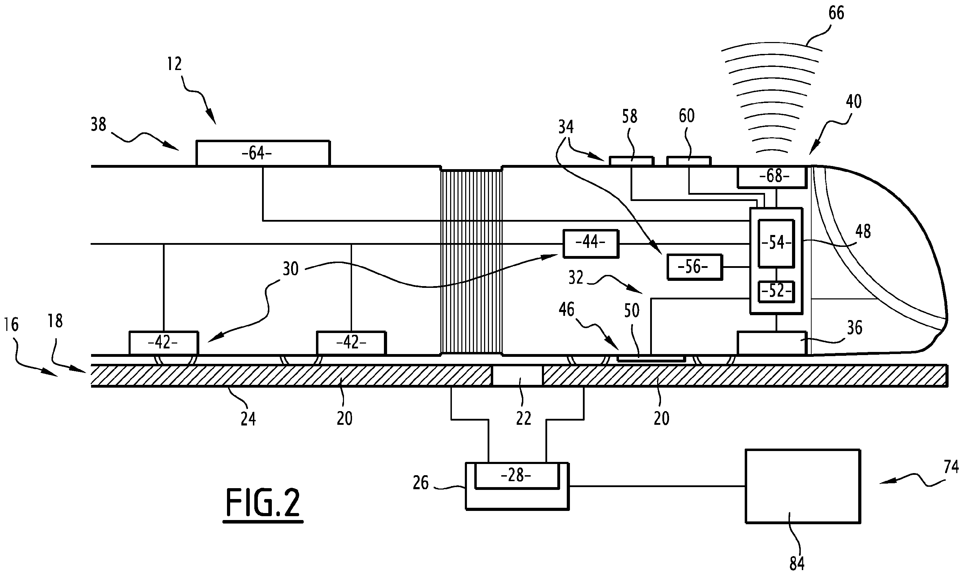

Chaque véhicule terrestre guidé 12 est propre à circuler sur une voie 16, comme illustré sur la figure 2. Dans l'exemple de réalisation de la figure 2, chaque véhicule terrestre guidé 12 est un tramway de type APS (Alimentation Par le Sol). La voie 16 comprend, comme connu en soi, deux rails de guidage parallèles non représentés sur les figures, et un rail 18 d'alimentation électrique des véhicules 12 s'étendant entre les deux rails de guidage, parallèlement à ces rails.

Le rail d'alimentation 18 comprend une suite de tronçons conducteurs 20 et de tronçons isolants 22 disposés alternativement sur une surface de support 24. Dans l'exemple de réalisation de la figure 2, trois tronçons conducteurs 20 sont disposés en regard d'un véhicule 12, bien que seulement deux tronçons conducteurs 20 soient représentés sur la figure 2.

De manière connue, chaque tronçon conducteur 20 fait partie d'un circuit électrique destiné à fournir un courant électrique d'alimentation des véhicules 12. Pour cela, chaque tronçon conducteur 20 est connecté à au moins un boîtier d'alimentation électrique 26, comme illustré sur la figure 2.

Chaque boîtier d'alimentation 26 comporte un récepteur de signaux électroniques, non représenté sur les figures. Chaque boîtier d'alimentation 26 comporte en outre un organe 28 de commutation électrique relié, d'une part, au récepteur de signaux électroniques, et d'autre part, à chaque circuit électrique 20 associé. Ainsi, chaque circuit électrique 20 est connecté à au moins un organe de commutation 28. Dans l'exemple de réalisation de la figure 2, chaque circuit électrique 20 est connecté à un organe de commutation 28, l'organe de commutation 28 de chaque boîtier d'alimentation 26 étant relié à deux circuits électriques 20 adjacents.

Chaque organe de commutation 28 comprend un organe de commutation amont relié au circuit électrique 20 amont et un organe de commutation aval relié au circuit électrique 20 aval. L'organe de commutation amont ou aval est formé d'au moins un contacteur électrique apte à ouvrir ou fermer le circuit électrique associé.

Comme représenté sur la figure 2, chaque véhicule terrestre guidé 12 comporte des moyens 30 de génération d'un signal de commande d'un des organes de commutation électrique 28, et un dispositif 32 de gestion d'un déraillement du véhicule 12, relié aux moyens de génération 30. Chaque véhicule terrestre guidé 12 comporte en outre avantageusement des moyens 34 d'alerte visuelle et/ou sonore à l'intérieur et/ou à l'extérieur du véhicule 12, des moyens 36 de freinage du véhicule, des moyens 38 de stockage d'énergie électrique, et des moyens 40 de communication, reliés au dispositif 32.

De manière connue, le signal de commande d'un des organes de commutation électrique 28 est généré par les moyens de génération 30 de manière périodique, selon une période par exemple sensiblement égale à deux micro secondes (µs). En outre, le signal généré par les moyens de génération 30 est propre à commander le ou l'un des organe(s) de commutation 28 relié(s) à l'un du ou des circuits électriques 20 disposés en regard du véhicule 12, pour la fermeture de ce circuit électrique 20. Dans l'exemple de réalisation de la figure 2, le signal généré par les moyens de génération 30 est propre à commander l'organe de commutation 28 relié aux circuits électriques 20 disposés à l'instant considéré en regard du véhicule 12, plus précisément sous ledit véhicule. Plus précisément, dans cet exemple, le signal généré par les moyens de génération 30 est propre à commander le contacteur aval de l'organe de commutation 28 relié au circuit électrique 20 aval, de manière à alimenter le tronçon conducteur disposé sous le véhicule 12.

Les moyens de génération 30 comprennent au moins une antenne 42 d'émission du signal de commande de l'organe de commutation aval 28, et un module 44 d'alimentation électrique de l'antenne 42. Dans l'exemple de réalisation de la figure 2, les moyens de génération 30 comprennent deux antennes d'émission 42, chaque antenne 42 étant reliée au module d'alimentation 44.

Le dispositif 32 comprend des moyens 46 de détection d'un déraillement du véhicule 12. Le dispositif 32 comprend en outre une unité 48 de traitement d'informations, reliée aux moyens de détection 46.

Dans l'exemple de réalisation de la figure 2, les moyens de détection 46 comprennent un capteur inductif 50, classiquement connu. Le capteur inductif 50 est agencé sous le véhicule 12 et est apte à mesurer une distance entre le véhicule 12 et un des rails de guidage de la voie 16. Le capteur inductif 50 est apte en outre à comparer la valeur de la distance mesurée à une valeur seuil prédéterminée.

En variante, les moyens de détection 46 comprennent un capteur optique, par exemple de type infrarouge, un capteur magnétique ou un capteur de type accéléromètre. De façon classique, l'unité de traitement 48 est formée d'une mémoire 52 associée à un processeur de données 54.

Le processeur 54 est relié aux moyens de détection 46, aux moyens de génération 30, aux moyens d'alerte visuelle et/ou sonore 34, aux moyens de freinage 36, aux moyens de stockage d'énergie 38 et aux moyens de communication 40. Le processeur 54 est propre à désactiver les moyens de génération 30, de sorte à inhiber la génération du signal de commande. Dans l'exemple de réalisation de la figure 2, le processeur 54 est connecté au module d'alimentation électrique 44 et est propre à générer un signal de commande d'arrêt du module 44.

Dans un exemple de réalisation préférée, le processeur 54 utilise une méthode sécuritaire de génération du signal de commande d'arrêt du module 44, afin d'être compatible avec le niveau de sécurité exigé par les normes ferroviaires.

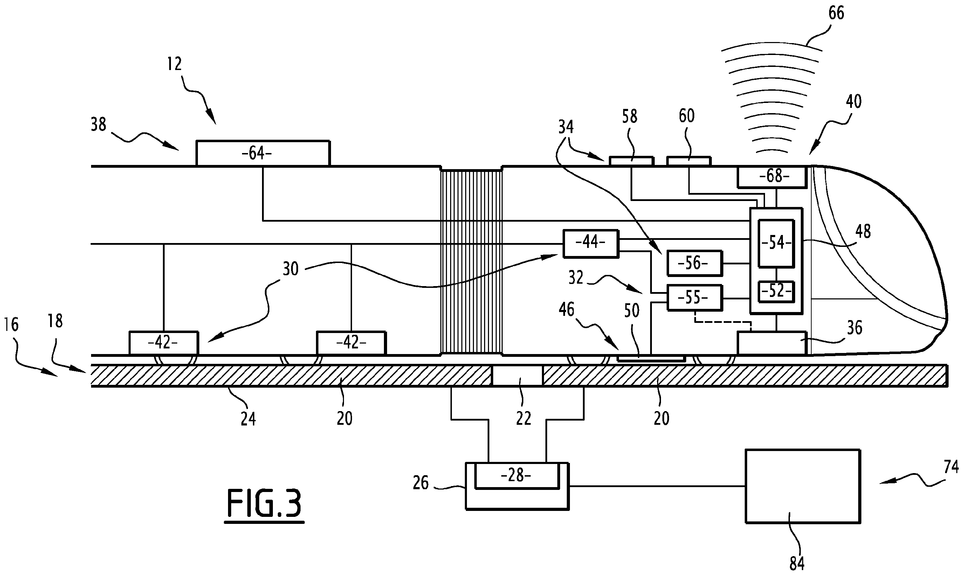

En variante, le dispositif 32 de gestion d'un déraillement comprend un dispositif 55 de commutation en sécurité, de type composant relais sécurisé, relié d'une part aux moyens de détection 46, et d'autre part, au module d'alimentation électrique 44, comme représenté sur la figure 3. Selon cette variante, le dispositif de commutation en sécurité 55 est propre générer un signal de commande d'arrêt du module 44 de manière fiable et en un temps très bref, compte-tenu du type de composant utilisé. En variante encore ou en complément, le dispositif 55 de commutation en sécurité est relié aux moyens de freinage 36, comme représenté en traits pointillés sur la figure 3, de manière à actionner le freinage de sécurité du véhicule de manière fiable et en un temps très bref.

Le processeur 54 est en outre avantageusement propre à générer un signal de commande des moyens d'alerte visuelle et/ou sonore 34, un signal de commande des moyens de freinage 36 et un signal de commande de déchargement de l'énergie électrique contenue dans les moyens de stockage d'énergie 38. Le processeur 54 est également propre à élaborer un message indiquant le déraillement du véhicule 12, suite à la détection du déraillement du véhicule 12 par les moyens de détection 46.

Dans l'exemple de réalisation de la figure 2, les moyens d'alerte visuelle et/ou sonore 34 comprennent un premier dispositif d'alarme sonore 56, un deuxième dispositif d'alarme sonore 58 et un dispositif d'alerte visuelle 60, reliés au processeur 54.

Dans l'exemple de réalisation de la figure 2, les moyens de freinage 36 comportent un module de freinage de sécurité propre à déclencher un freinage de sécurité du véhicule 12.

Comme illustré sur la figure 2, les moyens de stockage d'énergie 38 comportent par exemple une batterie d'alimentation électrique 64, fixée à demeure sur le toit du véhicule 12. La batterie d'alimentation 64 comprend par exemple des modules composés de différents accumulateurs. La batterie d'alimentation 64 est propre à récupérer et à stocker l'énergie de freinage du véhicule 12, comme connu en soi.

Les moyens de communication 40 sont propres à émettre à destination de l'installation 14, via une liaison de données 66, un message indiquant le déraillement du véhicule 12. Dans l'exemple de réalisation des figures 1 et 2, la liaison de données 66 est une liaison radioélectrique conforme à la norme CEM 50-121, la norme EN 50159 sur les systèmes de signalisation-télécommunication et de traitement-communication de sécurité sur des systèmes de transmission, ainsi que pour les niveaux d'émission à la norme ETSI 300 330 pour les fréquences en deçà de 30MHz et à la norme ETSI 300 340 pour les fréquences au-delà de 30MHz.

Les moyens de communication 40 comportent un émetteur/récepteur de signaux radioélectriques 68.

Le premier dispositif d'alarme sonore 56 est agencé à l'intérieur du véhicule 12, et le deuxième dispositif d'alarme sonore 58 est agencé à l'extérieur du véhicule 12.

De manière classique, le dispositif d'alerte visuelle 60 est propre à émettre un signal lumineux d'alerte à l'extérieur du véhicule 12.

Comme représenté sur la figure 1, l'installation 14 de gestion de la circulation de chaque véhicule terrestre guidé 12 comprend plusieurs dispositifs de signalisation 70, bien qu'un seul dispositif de signalisation 70 soit représenté sur la figure 1 pour des raisons de clarté. L'installation 14 comporte également un centre de communication distant 72 et un système 74 d'alimentation électrique des boîtiers d'alimentation 26, et donc des circuits électriques 20 du rail d'alimentation 18.

De manière classique, chaque dispositif de signalisation 70 présente un état de signalisation parmi plusieurs états de signalisation prédéterminés. Chaque dispositif de signalisation 70 est par exemple formé d'une lampe de signalisation et présente plusieurs états lumineux possibles correspondant à différents états physiques de la lampe.

Le centre de communication distant 72 comporte un dispositif 76 de commande des dispositifs de signalisation 70 et du système d'alimentation électrique 74. Le centre de communication 72 comporte également des moyens 78 d'émission/réception de données et des moyens 80 de localisation de chaque véhicule 12.

Le système d'alimentation électrique 74 comprend un dispositif d'alimentation électrique 84 connecté à chaque boîtier d'alimentation électrique 26, comme illustré sur la figure 2. Le dispositif d'alimentation 84 est propre à fournir un courant électrique à chaque boîtier d'alimentation 26, pour l'alimentation électrique générale du rail d'alimentation 18.

Le dispositif de commande 76 est relié aux moyens 78 d'émission / réception de données et aux moyens de localisation 80 et est propre à générer un signal de modification de l'état de signalisation d'au moins un des dispositifs de signalisation 70, en fonction de la réception d'un message indiquant le déraillement d'un véhicule 12. Dans l'exemple de réalisation de la figure 1, le dispositif de commande 76 est propre à générer un signal de modification de l'état de signalisation d'un dispositif de signalisation 70 agencé à proximité d'un véhicule 12 ayant déraillé.

Le dispositif de commande 76 est également propre à générer un signal de commande d'arrêt du système d'alimentation électrique 74, en fonction de la réception d'un message indiquant le déraillement d'un véhicule 12.

Le dispositif de commande 76 est propre en outre à élaborer un message de recommandation d'une limite de vitesse ou d'un arrêt définitif pour au moins un des véhicules 12, en fonction de la réception d'un message indiquant le déraillement d'un véhicule 12. En complément, le dispositif de commande 76 est propre à adjoindre à ce message la localisation d'un véhicule 12 ayant déraillé.

Le dispositif de commande 76 est également propre à générer un message d'alerte afin de déclencher une intervention d'une équipe apte à consigner la zone de la voie 16 au niveau de laquelle s'est produit le déraillement, d'une équipe de secours pour porter assistance aux passagers du véhicule 12 ayant déraillé, et d'une équipe de maintenance apte à intervenir sur la voie 16 pour sa remise en service.

Les moyens 78 d'émission/réception de données sont propres à recevoir de la part des moyens de communication 40 de chaque véhicule 12, via chaque liaison de données 66, un message indiquant le déraillement d'un véhicule 12 ayant déraillé. Les moyens 78 d'émission/réception de données sont en outre propres à ré-émettre ce message sur chacune des autres liaisons de données 66 en direction des autres véhicules 12 de l'ensemble 10. Ils sont propres enfin à émettre le signal de modification de l'état de signalisation d'au moins un des dispositifs de signalisation 70, le signal de commande d'arrêt du système d'alimentation électrique 74, ainsi que le message de recommandation d'une limite de vitesse ou d'un arrêt définitif pour au moins un des véhicules 12. Dans l'exemple de réalisation de la figure 1, les moyens 78 d'émission/réception de données comportent un émetteur/récepteur de signaux radioélectriques 82.

Les moyens de localisation 80 comportent par exemple des moyens de traitement de données de localisation, ces données étant par exemple sous forme d'une base de données, ces données étant reçues de chaque véhicule 12, de manière à déterminer et mettre à jour en temps réel la localisation de chaque véhicule 12 de l'ensemble 10.

Le fonctionnement du dispositif 32 de gestion d'un déraillement selon l'invention va désormais être expliqué.

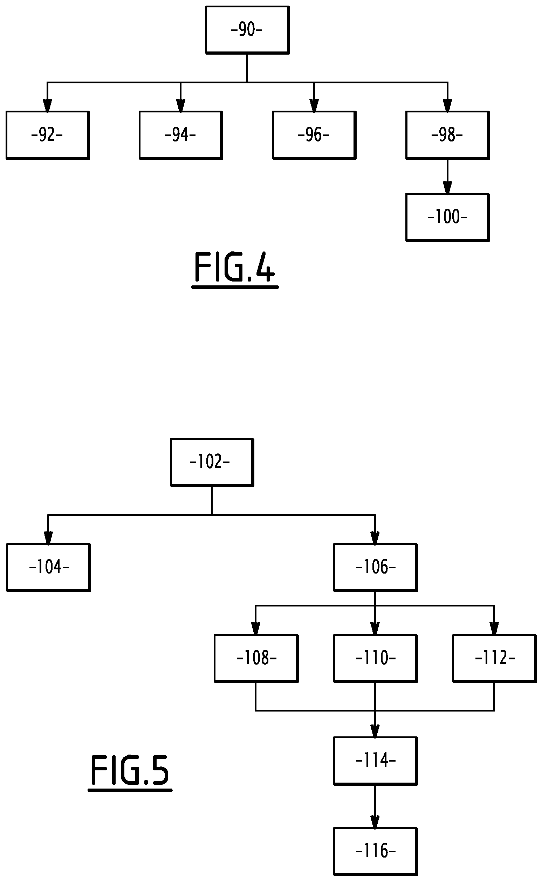

Sur la figure 4 sont représentées les étapes d'un procédé de gestion d'un déraillement selon l'invention, mis en oeuvre par le dispositif de gestion 32 de l'un des véhicules 12.

Initialement, le véhicule 12 circule sur la voie 16, et le circuit électrique 20 disposé de manière centrale en regard du véhicule 12 sur la figure 2 est fermé. On suppose qu'à un instant donné, le véhicule 12 déraille, rendant ainsi le circuit électrique 20 au moins partiellement accessible à d'éventuels piétons.

Au cours d'une étape initiale 90, les moyens de détection 46 détectent le déraillement du véhicule 12. Dans l'exemple de réalisation de la figure 2, le capteur inductif 50 détecte le déraillement du véhicule 12, par mesure d'une distance entre le véhicule 12 et un des rails de guidage de la voie 16 et par comparaison de la valeur de cette mesure à une valeur seuil prédéterminée ou à une plage prédéterminée de valeurs. Le capteur 50 transmet alors au processeur 54 un signal indiquant le déraillement du véhicule 12.

Au cours d'une étape 92 suivante, le processeur 54 désactive les moyens de génération 30, de sorte à inhiber la génération du signal de commande Dans l'exemple de réalisation de la figure 2, le processeur 54 génère, pour effectuer cette désactivation, un signal de commande d'arrêt du module d'alimentation électrique 44, puis transmet ce signal au module 44. En variante, cette désactivation est réalisée par le dispositif de commutation en sécurité 55.

Les deux antennes 42 n'étant plus alimentées par le module 44, elles cessent alors d'émettre le signal de commande de l'organe de commutation 28 aval relié au circuit électrique 20 disposé de manière centrale en regard du véhicule 12. Le récepteur de signaux électroniques du boîtier d'alimentation 26 associé ne reçoit plus le signal de commande de l'organe de commutation aval 28, provoquant ainsi l'ouverture du circuit électrique 20 disposé de manière centrale en regard du véhicule 12. Ceci permet d'imposer à ce circuit électrique 20 un potentiel électrique nul, et d'empêcher ainsi d'éventuels piétons de s'électrocuter à la suite du déraillement du véhicule 12.

Au cours d'une étape 94 effectuée en parallèle de l'étape 92, le processeur 54 génère un signal de commande de déchargement de l'énergie électrique contenue dans les moyens de stockage d'énergie 38, puis transmet ce signal aux moyens de stockage d'énergie 38. Par « étape effectuée en parallèle d'une autre étape », on entend que les deux étapes présentent une même condition initiale de déclenchement, sans être nécessairement effectuées de manière synchrone. Ainsi, les étapes 92 et 94 sont effectuées à la suite de la fin de l'étape initiale 90.

Dans l'exemple de réalisation de la figure 2, le processeur 54 génère, au cours de l'étape 94, un signal de commande de déchargement de l'énergie électrique contenue dans la batterie d'alimentation électrique 64. La batterie d'alimentation 64 se décharge alors, ce qui permet de réduire le risque d'incendie ultérieur de la batterie 64, pouvant conduire à des dégâts matériels et/ou humains. Au cours de l'étape 94, aucun autre système de stockage d'énergie que les moyens 38 destinés à l'alimentation électrique du véhicule 12 n'est déchargé par le processeur 54. En particulier, le processeur 54 n'émet pas de signal de déchargement des éventuels systèmes de stockage d'énergie alimentant un éventuel dispositif de régulation de chaleur agencé au sein du véhicule 12.

Au cours d'une étape 96 effectuée en parallèle des étapes 92 et 94, le processeur 54 élabore un message indiquant le déraillement du véhicule 12, puis transmet ce message aux moyens de communication 40. L'émetteur/récepteur de signaux radioélectriques 68 émet alors à destination de l'installation 14, via la liaison de données 66, le message indiquant le déraillement du véhicule 12.

Au cours d'une étape 98 effectuée en parallèle des étapes 92, 94 et 96, le processeur 54 génère un signal de commande des moyens d'alerte visuelle et/ou sonore 34, puis transmet ce signal aux moyens d'alerte visuelle et/ou sonore 34. Dans l'exemple de réalisation de la figure 2, le processeur 54 génère un signal de commande du premier dispositif d'alarme sonore 56, du deuxième dispositif d'alarme sonore 58 et du dispositif d'alerte visuelle 60. Le premier dispositif d'alarme sonore 56, respectivement le deuxième dispositif d'alarme sonore 58, émet alors un signal sonore à l'intérieur du véhicule 12, respectivement à l'extérieur du véhicule 12. Le dispositif d'alerte visuelle 60 émet un signal lumineux d'alerte à l'extérieur du véhicule 12. Cette étape permet d'alerter les passagers et le conducteur du véhicule 12, ainsi que les autres usagers de la voie 16.

Au cours d'une étape 100 effectuée à la suite de l'étape 98, le processeur 54 génère un signal de commande des moyens de freinage 36, puis transmet ce signal aux moyens de freinage 36. Dans l'exemple de réalisation de la figure 2, le processeur 54 génère un signal de commande du module de freinage de sécurité inclus dans les moyens de freinage 36, ceci provoquant un freinage de sécurité du véhicule 12.

En variante, cette commande des moyens de freinage 36 est réalisée par le dispositif de commutation en sécurité 55.

Le signal sonore émis par le premier dispositif d'alarme sonore 56 à l'intérieur du véhicule 12, au cours de l'étape précédente 98, permet avantageusement aux passagers et au conducteur du véhicule 12 de se préparer avant le freinage de sécurité du véhicule 12.

Le fonctionnement de l'installation 14 de gestion de la circulation de chaque véhicule terrestre guidé 12 va désormais être expliqué, en regard des étapes 102 à 116 représentées sur la figure 5.

Au cours d'une étape 102 effectuée à la suite de l'étape 96, les moyens 78 d'émission/réception de données du centre de communication distant 70 reçoivent le message indiquant le déraillement du véhicule 12 ayant déraillé, via la liaison de données 66 associée. Les moyens 78 d'émission/réception de données transmettent alors ce message au dispositif de commande 76, puis ré-mettent ce message sur chacune des autres liaisons de données 66. Ceci permet d'informer les autres véhicules 12 de l'ensemble 10 qu'un des véhicules 12 a déraillé.

Au cours d'une étape 104 suivante, le dispositif de commande 76 génère un signal de commande d'arrêt du système d'alimentation électrique 74. Le dispositif d'alimentation électrique 84 cesse alors de fournir un courant électrique à chaque boîtier d'alimentation 26, et le rail d'alimentation 18 n'est plus alimenté électriquement.

Au cours d'une étape 106 effectuée en parallèle de l'étape 104, les moyens de localisation 80 déterminent la position géographique du véhicule 12 ayant déraillé, et transmettent cette position géographique au dispositif de commande 76.

Au cours d'une étape 108 effectuée à la suite de l'étape 106, le dispositif de commande 76 génère un signal de modification de l'état de signalisation d'au moins un des dispositifs de signalisation 70. De préférence, le dispositif de commande 76 génère un signal de modification de l'état de signalisation d'au moins un dispositif de signalisation 70 agencé à proximité du véhicule 12 ayant déraillé. Dans l'exemple de réalisation de la figure 1, le dispositif de commande 76 génère un signal de modification de l'état de signalisation du dispositif de signalisation 70 agencé à proximité du véhicule 12 ayant déraillé.

Au cours d'une étape 110 effectuée en parallèle de l'étape 108, le dispositif de commande 76 transmet aux moyens 78 d'émission/réception de données un message de recommandation d'une limite de vitesse ou d'un arrêt définitif pour au moins un des autres véhicules 12. Dans l'exemple de réalisation de la figure 1, le dispositif de commande 76 transmet aux moyens 78 d'émission/réception de données un message de recommandation d'une limite de vitesse pour chaque véhicule 12 de l'ensemble 10, et d'arrêt définitif pour le ou chaque véhicule 12 éventuel se trouvant à proximité du véhicule 12 ayant déraillé. Les moyens 78 d'émission/réception de données émettent alors ce message à destination de chaque véhicule 12. En variante, le dispositif de commande 76 adjoint à ce message la localisation du véhicule 12 ayant déraillé, et transmet cette localisation, conjointement avec le message, aux moyens 78 d'émission/réception de données.

Au cours d'une étape 112 effectuée en parallèle des étapes 108 et 110, le dispositif de commande 76 génère un message d'alerte afin de déclencher une intervention d'une équipe apte à consigner la zone de la voie 16 au niveau de laquelle s'est produit le déraillement.

Au cours d'une étape 114 suivante effectuée à la suite de l'une des étapes 108 à 112, le dispositif de commande 76 génère un message d'alerte afin de déclencher une intervention d'une équipe de secours pour les passagers du véhicule 12 ayant déraillé.

Au cours d'une étape 116 finale, le dispositif de commande 76 génère un message d'alerte afin de déclencher une intervention d'une équipe de maintenance apte à intervenir sur la voie 16 pour sa remise en service.

En variante, l'étape 114 de planification d'une intervention d'une équipe de secours et l'étape 116 de planification d'une intervention d'une équipe de maintenance sont effectuées simultanément.

En variante ou en complément, au moins un véhicule 12 situé à proximité du véhicule 12 ayant déraillé reçoit directement, de la part des moyens de communication 40 de ce véhicule 12, le message indiquant le déraillement. Le message indiquant le déraillement est alors directement transmis par le véhicule 12 ayant déraillé au véhicule 12 situé à proximité, sans passer par le centre de communication distant 72. Le temps de communication de l'information de déraillement à destination de ce véhicule 12 est ainsi avantageusement réduit.

Dans le procédé de gestion d'un déraillement d'un véhicule terrestre guidé 12 selon l'invention, la détection du déraillement par le dispositif de gestion 32 est automatique. Ceci permet d'assurer une détection fiable du déraillement.

En activant automatiquement les moyens de freinage 36 suite à la détection du déraillement du véhicule 12, le procédé de gestion d'un déraillement selon l'invention permet en outre d'assurer de manière fiable le freinage d'urgence du véhicule 12.

Grâce à l'émission d'un message indiquant le déraillement du véhicule 12, le procédé de gestion selon l'invention permet également d'avertir et d'alerter les autres véhicules 12 de l'ensemble 10, ainsi que de déclencher l'intervention de ressources matérielles et humaines. Ceci permet d'améliorer la rapidité d'intervention et l'organisation des secours à la suite du déraillement.

Le procédé de gestion d'un déraillement d'un véhicule terrestre guidé 12 selon l'invention permet de réduire avantageusement le risque de collision entre le véhicule 12 ayant déraillé et les autres véhicules 12 de l'ensemble 10. En outre, grâce à la désactivation des moyens de stockage d'énergie, et à l'activation des moyens d'alerte visuelle et/ou sonore, le procédé de gestion selon l'invention permet d'améliorer la sécurité des passagers, du conducteur, et/ou des piétons.

On conçoit ainsi que le procédé de gestion d'un déraillement d'un véhicule terrestre guidé 12 selon l'invention permet d'améliorer la sécurité de piétons se trouvant à proximité de la voie lors d'un déraillement du véhicule 12, tout en assurant une détection fiable du déraillement.

## Revendications

1. Procédé de gestion d'un déraillement d'un véhicule terrestre guidé (12) circulant sur une voie (16), la voie (16) comportant un rail (18) d'alimentation électrique du véhicule (12) par le sol, le rail (18) comprenant une pluralité de circuits électriques (20), chaque circuit électrique (20) étant relié à au moins un organe de commutation électrique (28),
le procédé étant mis en oeuvre par un dispositif (32) embarqué au sein du véhicule (12), le dispositif (32) comprenant des moyens (46) de détection du déraillement du véhicule terrestre (12) et des moyens (48, 54) de traitement reliés aux moyens de détection (46), le véhicule (12) comprenant des moyens (30) de génération d'un signal de commande du ou d'un des organe(s) de commutation électrique (28) relié(s) à l'un du ou des circuits électriques (20) disposés en regard du véhicule terrestre (12), pour la fermeture dudit circuit électrique (20), les moyens de génération (30) étant reliés aux moyens de traitement (48, 54),
le procédé comprenant une étape (90) de détection, par les moyens de détection (46), du déraillement du véhicule terrestre (12), et
suite à la détection du déraillement du véhicule (12) par les moyens de détection (46), une étape (92) de désactivation, par les moyens de traitement (48, 54), des moyens de génération (30), de sorte à inhiber la génération du signal de commande, afin de provoquer l'ouverture du ou des circuits (20) en regard du véhicule (12).

2. Procédé selon la revendication 1, dans lequel les moyens de génération (30) comprennent au moins une antenne (42) d'émission du signal de commande et un module (44) d'alimentation électrique de l'antenne (42), et lors de l'étape de désactivation (92), les moyens de traitement (48, 54) sont propres à générer un signal de commande d'arrêt du module d'alimentation électrique (44).

3. Procédé selon la revendication 1 ou 2, dans lequel le véhicule (12) comporte des moyens (34) d'alerte visuelle et/ou sonore à l'intérieur et/ou à l'extérieur du véhicule (12), reliés aux moyens de traitement (48, 54), et le procédé comprend en outre une étape (98) de génération, par les moyens de traitement (48, 54), d'un signal de commande desdits moyens d'alerte (34), et de transmission dudit signal aux moyens d'alerte (34) suite à la détection du déraillement du véhicule (12).

4. Procédé selon la revendication 3, dans lequel le véhicule (12) comporte des moyens (36) de freinage du véhicule (12), reliés aux moyens de traitement (48, 54), et le procédé comprend en outre une étape (100) de génération, par les moyens de traitement (48, 54), d'un signal de commande de freinage, l'étape (100) de génération d'un signal de commande de freinage étant effectuée après l'étape (98) de génération d'un signal de commande des moyens (34) d'alerte visuelle et/ou sonore à l'intérieur du véhicule (12).

5. Procédé selon l'une quelconque des revendications précédentes, dans lequel le véhicule (12) comporte des moyens (38) de stockage d'énergie électrique, reliés aux moyens de traitement (48, 54), et le procédé comprend en outre une étape (94) de génération, par les moyens de traitement (48, 54), d'un signal de commande de déchargement de l'énergie électrique contenue dans les moyens de stockage (38), et de transmission dudit signal aux moyens de stockage (38) suite à la détection du déraillement du véhicule (12).

6. Procédé selon l'une quelconque des revendications précédentes, dans lequel le véhicule (12) comporte des moyens de communication (40), reliés aux moyens de traitement (48, 54), et le procédé comprend en outre une étape (96) d'élaboration, par les moyens de traitement (48, 54), d'un message indiquant le déraillement du véhicule (12), et de transmission dudit message aux moyens de communication (40) suite à la détection du déraillement du véhicule (12).

7. Véhicule terrestre guidé (12) propre à circuler sur une voie (16), la voie (16) comportant un rail (18) d'alimentation électrique du véhicule (12) par le sol, le rail (18) comprenant une pluralité de circuits électriques (20), chaque circuit électrique (20) étant relié à au moins un organe de commutation électrique (28),
le véhicule (12) comprenant un dispositif (32) de gestion d'un déraillement du véhicule (12) et des moyens (30) de génération d'un signal de commande du ou d'un des organe(s) de commutation électrique (28) relié(s) à l'un du ou des circuits électriques (20) disposés en regard du véhicule terrestre (12), pour la fermeture dudit circuit électrique (20),
le dispositif (32) comprenant des moyens (46) de détection du déraillement du véhicule terrestre (12) et des moyens (48, 54) de traitement reliés aux moyens de détection (46) et aux moyens de génération (30),
les moyens de traitement (48, 54) étant propres à désactiver les moyens de génération (30) pour inhiber la génération du signal de commande, afin de provoquer l'ouverture du ou des circuits (20) en regard du véhicule (12).

8. Véhicule (12) selon la revendication 7, dans lequel le véhicule (12) comporte des moyens de communication (40), reliés aux moyens de traitement (48, 54), et en ce que les moyens de traitement (48, 54) sont propres à élaborer un message indiquant le déraillement du véhicule (12) et à transmettre ce message aux moyens de communication (40), suite à la détection du déraillement du véhicule (12) par les moyens de détection (46).

9. Ensemble (10) comprenant une pluralité de véhicules terrestres guidés (12) propres à circuler sur une voie (16) et une installation (14) de gestion de la circulation de chaque véhicule terrestre guidé (12),
la voie (16) comportant un rail (18) d'alimentation électrique du ou de chaque véhicule (12) par le sol, le rail (18) comprenant une pluralité de circuits électriques (20), chaque circuit électrique (20) étant relié à au moins un organe de commutation électrique (28),
l'installation (14) comprenant un centre de communication distant (72),
chaque véhicule terrestre guidé (12) étant conforme à la revendication 8, et chaque véhicule terrestre guidé (12) étant propre à communiquer avec le centre de communication distant (72) via une liaison de données (66), les moyens de communication (40) de chaque véhicule terrestre guidé (12) étant propres à émettre à destination du centre de communication distant (72), via la liaison de données (66), un message indiquant le déraillement du véhicule (12).

10. Ensemble (10) selon la revendication 9, dans lequel l'installation (14) comprend en outre une pluralité de dispositifs de signalisation (70), chaque dispositif de signalisation (70) présentant un état de signalisation parmi une pluralité d'états de signalisation prédéterminés, et le centre de communication distant (72) comporte des moyens (76) de commande de chaque dispositif de signalisation (70), les moyens de commande (76) étant propres à générer un signal de modification de l'état de signalisation d'au moins un des dispositifs de signalisation (70), en fonction de la réception d'un message indiquant le déraillement d'un véhicule (12).

11. Ensemble (10) selon la revendication 9 ou 10, dans lequel l'installation (14) comprend en outre un système (74) d'alimentation électrique des circuits électriques (20) du rail d'alimentation (18), et le centre de communication distant (72) comporte des moyens (76) de commande du système d'alimentation électrique (74), les moyens de commande (76) étant propres à générer un signal de commande d'arrêt du système d'alimentation électrique (74), en fonction de la réception d'un message indiquant le déraillement d'un véhicule (12).

12. Ensemble (10) selon l'une des revendications 9 à 11, dans lequel le centre de communication distant (72) comporte des moyens (80) de localisation de chaque véhicule terrestre guidé (12), et des moyens (78) d'émission de la localisation d'un véhicule terrestre guidé (12) ayant déraillé, à destination des autres véhicules terrestres guidés (12).

## Patentansprüche

1. Verfahren zum Umgehen mit einer Entgleisung eines geführten Bodenfahrzeugs (12), das sich auf einem Gleis (16) bewegt, wobei das Gleis (16) eine Schiene (18) zum elektrischen Versorgen des Fahrzeugs (12) über den Boden aufweist, wobei die Schiene (18) mehrere elektrische Stromkreise (20) aufweist, wobei jeder elektrischer Stromkreis (20) mit mindestens einem elektrischen Schaltelement (28) verbunden ist,
wobei das Verfahren durch eine in das Fahrzeug (12) eingebettete Vorrichtung (32) implementiert wird, wobei die Vorrichtung (32) Mittel (46) zum Detektieren der Entgleisung des Bodenfahrzeugs (12) und Verarbeitungsmittel (48, 54) aufweist, die mit den Mitteln zum Detektieren (46) verbunden sind, wobei das Fahrzeug (12) Mittel (30) zum Erzeugen eines Steuersignals des elektrischen Schaltelements oder einem der elektrischen Schaltelemente (28) aufweist, das (die) mit dem einem oder den elektrischen Stromkreis(en) (20), die dem Bodenfahrzeug (12) gegenüberliegend angeordnet sind, um den elektrische Stromkreis (20) zu schließen, verbunden ist (sind), wobei die Mittel zum Erzeugen (30) mit den Verarbeitungsmitteln (48, 54) verbunden sind,
wobei das Verfahren einen Schritt (90) zum Detektieren, durch die Mittel zum Detektieren (46), der Entgleisung des Bodenfahrzeugs (12) aufweist; und
nach der Detektion der Entgleisung des Fahrzeugs (12) durch die Detektionsmittel (46) einen Schritt (92) der Deaktivierung, durch die Verarbeitungsmittel (48, 54), der Erzeugungsmittel (30) aufweist, sodass die Erzeugung des Steuersignals unterbunden wird, um die Öffnung des einen oder der elektrischen Stromkreise(s) (20), die dem Fahrzeug (12) gegenüberliegen, zu bewirken.

2. Verfahren nach Anspruch 1, wobei die Erzeugungsmittel (30) mindestens eine Antenne (42) zum Übertragen des Steuersignals und ein Modul (44) zum elektrischen Versorgen der Antenne (42) aufweisen und bei dem Deaktivierungsschritt (92) die Verarbeitungsmittel (48, 54) dazu geeignet sind, ein Steuersignal zum Stoppen des Moduls zum elektrischen Versorgen (44) zu erzeugen.

3. Verfahren nach Anspruch 1 oder 2, wobei das Fahrzeug (12) Mittel (34) zur visuellen und/oder Tonalarmierung innerhalb und/oder außerhalb des Fahrzeugs (12) aufweist, die mit den Verarbeitungsmitteln (48, 54) verbunden sind, und das Verfahren ferner einen Schritt (98) zum Erzeugen, durch die Verarbeitungsmittel (48, 54), eines Steuersignals der Mittel zur Alarmierung (34) und zum Übertragen des Signals an die Mittel zur Alarmierung (34) nach der Detektion der Entgleisung des Fahrzeugs (12) aufweist.

4. Verfahren nach Anspruch 3, in dem das Fahrzeug (12) Mittel (36) zum Bremsen des Fahrzeugs (12) aufweist, die mit den Verarbeitungsmitteln (48, 54) verbunden sind, und das Verfahren ferner einen Schritt (100) aufweist zum Erzeugen, durch die Verarbeitungsmittel (48, 54), eines Bremssteuersignals, wobei der Schritt (100) zum Erzeugen eines Bremssteuersignals nach dem Schritt (98) zum Erzeugen eines Steuersignals der Mittel (34) zur visuellen und/oder Tonalarmierung innerhalb und/oder außerhalb des Fahrzeugs (12) durchgeführt wird.

5. Verfahren nach einem der vorhergehenden Ansprüche, bei dem das Fahrzeug (12) Mittel (38) zum Speichern elektrischer Energie aufweist, die mit den Verarbeitungsmitteln (48, 54) verbunden sind, und das Verfahren ferner einen Schritt (94) des Erzeugens durch die Verarbeitungsmittel (48, 54) eines Steuersignals zum Entladen der in den Speichermitteln (38) enthaltenen elektrischen Energie und zum Übertragen des Signals an die Speichermittel (38) nach der Detektion der Entgleisung des Fahrzeugs (12) aufweist.

6. Verfahren nach einem der vorhergehenden Ansprüche, in dem das Fahrzeug (12) Kommunikationsmittel (40) aufweist, die mit den Verarbeitungsmitteln (48, 54) verbunden sind, und das Verfahren ferner einen Schritt (96) zum Erzeugen einer Nachricht durch die Verarbeitungsmittel (48, 54), die die Entgleisung des Fahrzeugs (12) anzeigt, und zum Übertragen der Nachricht an die Kommunikationsmittel (40) nach der Detektion der Entgleisung des Fahrzeugs (12) aufweist.

7. Geführtes Bodenfahrzeug (12), geeignet zum Fahren auf einem Gleis 16), wobei das Gleis (16) eine Schiene (18) zum elektrischen Versorgen des Fahrzeugs (12) über den Boden aufweist, wobei die Schiene (18) eine Mehrzahl von elektrischen Stromkreisen (20) aufweist, wobei jeder elektrische Stromkreis (20) mit mindestens einem elektrischen Schaltelement (28) verbunden ist,
wobei das Fahrzeug (12) eine Vorrichtung (32) zum Umgehen mit einer Entgleisung des Fahrzeugs (12) und Mittel (30) zum Erzeugen eines Steuersignals des elektrischen Schaltelements oder der elektrischen Schaltelemente (28), das (die) mit einem der oder den dem Bodenfahrzeug (12) zugewandten elektrischen Stromkreisen (20) verbunden ist (sind), um den elektrischen Stromkreis (20) zu schließen, aufweist,
wobei die Vorrichtung (32) Mittel (46) zum Detektieren des Entgleisens des Bodenfahrzeugs (12) und Verarbeitungsmittel (48, 54) aufweist, die mit den Mitteln zum Detektieren (46) und den Mitteln zum Erzeugen (30) verbunden sind,
wobei die Verarbeitungsmittel (48, 54) dazu geeignet sind, die Mittel zum Erzeugen (30) zu deaktivieren, um die Erzeugung des Steuersignals zu unterbinden, sodass die Öffnung des oder der Stromkreise(s) (20), die dem Fahrzeug gegenüberliegen (12), bewirkt wird.

8. Fahrzeug (12) nach Anspruch 7, in dem das Fahrzeug (12) Kommunikationsmittel (40) aufweist, die mit den Verarbeitungsmitteln (48, 54) verbunden sind, und dass die Verarbeitungsmittel (48, 54)) geeignet sind, eine Nachricht zu erzeugen, die die Entgleisung des Fahrzeugs (12) anzeigt, und diese Nachricht an die Kommunikationsmittel (40) nach der Detektion der Entgleisung des Fahrzeugs (12) durch die Detektionsmittel (46) zu übertragen.

9. Anordnung (10) mit mehreren geführten Bodenfahrzeugen (12), die zum Fahren auf einem Gleis (16) geeignet sind, und einer Anlage (14) zum Verwalten des Fahrens jedes geführten Bodenfahrzeugs (12),
wobei das Gleis (16) eine Schiene (18) zum elektrischen Versorgen des oder jeden Fahrzeugs (12) über den Boden aufweist, wobei die Schiene (18) eine Mehrzahl von elektrischen Stromkreisen (20) aufweist, wobei jeder elektrische Stromkreis (20) mit mindestens einem elektrischen Schaltelement (28) verbunden ist,
wobei die Anlage (14) ein entferntes Kommunikationszentrum (72) aufweist,
wobei jedes geführte Bodenfahrzeug (12) konform mit Anspruch 8 ist und jedes geführte Bodenfahrzeug (12) geeignet ist, über eine Datenverbindung (66) mit dem entfernten Kommunikationszentrum (72) zu kommunizieren, wobei die Kommunikationsmittel (40) jedes geführten Bodenfahrzeugs (12) dazu geeignet sind, über die Datenverbindung (66) eine Nachricht an das entfernte Kommunikationszentrum (72) zu senden, die die Entgleisung des Fahrzeugs (12) anzeigt.

10. Anordnung (10) nach Anspruch 9, wobei die Anlage (14) ferner eine Mehrzahl von Signalisierungsmitteln (70) aufweist, wobei jedes Signalisierungsmittel (70) einen Signalisierungszustand aus einer Vielzahl von vorgegebenen Signalisierungszuständen aufweist, und das entfernte Kommunikationszentrum (72) Mittel (76) zum Steuern jeder Signalisierungsvorrichtung (70) aufweist, wobei die Mittel zum Steuern (76) geeignet sind, ein Signal zum Modifizieren des Signalisierungszustands mindestens einer der Signalisierungsvorrichtungen (70) in Abhängigkeit des Empfangens einer Nachricht, die die Entgleisung eines Fahrzeugs (12) anzeigt, zu erzeugen.

11. Anordnung (10) nach Anspruch 9 oder 10, wobei die Anlage (14) ferner ein System (74) zum elektrischen Versorgen der elektrischen Stromkreise (20) der Versorgungsschiene (18) aufweist und das entfernte Kommunikationszentrum (72) Mittel (76) zum Steuern des Systems zum elektrischen Versorgen (74) aufweist, wobei die Steuermittel (76) geeignet sind, ein Signal zum Stoppen des Systems zum elektrischen Versorgen (74), abhängig von dem Empfang einer Nachricht, die die Entgleisung eines Fahrzeugs (12) anzeigt, zu erzeugen.

12. Anordnung (10) nach einem der Ansprüche 9 bis 11, in dem das entfernte Kommunikationszentrum (72) Mittel (80) zum Lokalisieren jedes landgesteuerten Fahrzeugs (12) und Mittel (78) zum Übertragen des Ortes eines geführten Bodenfahrzeugs (12), das entgleist ist, an andere geführte Bodenfahrzeuge (12) aufweist.

## Claims

1. A method for managing a derailment of a guided ground vehicle (12) traveling on a track (16), the track (16) comprising an electric contact rail (18) for supplying electricity to the vehicle (12) via the ground, the rail (18) including a plurality of electrical circuits (20), each electrical circuit (20) being connected to at least one electric switching member (28),
the method being implemented by an onboard device (32) within the vehicle (12), the device (32) including detecting means (46) for detecting the derailment of the ground vehicle (12) and processing means (48, 54) connected to the detecting means (46), the vehicle (12) including generating means (30) for generating a control signal for controlling the or one of the electric switching member(s) (28) connected to the or one of the electrical circuits (20) positioned across from the ground vehicle (12), to close said electrical circuit (20), the generating means (30) being connected to the processing means (48, 54),
the method including a step (90) for detecting, by the detecting means (46), the derailment of the ground vehicle (12), and
after the detection, by the detecting means (46), of the derailment of the vehicle (12), a step (92) for deactivating, by the processing means (48, 54), the generating means (30), so as to inhibit the generation of the control signal, in order to cause the opening of the circuit(s) (20) across from the vehicle (12).

2. The method according to claim 1, wherein the generating means (30) include at least one transmission antenna (42) for transmitting the control signal and one electrical power supply module (44) for supplying electric power to the antenna (42), and during the deactivation step (92), the processing means (48, 54) are adapted to generate a control signal to stop the electrical power supply module (44).

3. The method according to claim 1 or 2, wherein the vehicle (12) comprises visual and/or sound alert means (34) for alerting inside and/or outside the vehicle (12), connected to the processing means (48, 54), and the method further includes a step (98) for generating, by the processing means (48, 54), a control signal for controlling said alert means (34), and for sending said signal to the alert means (34) after the detection of the derailment of the vehicle (12).

4. The method according to claim 3, wherein the vehicle (12) comprises braking means (36) for braking the vehicle (12), connected to the processing means (48, 54), and the method further includes a step (100) for generating, by the processing means (48, 54), a braking control signal, the step (100) for generating a braking control signal being carried out after the step (98) for generating a control signal for the visual and/or sound alert means (34) inside the vehicle (12).

5. The method according to any one of the preceding claims, wherein the vehicle (12) comprises storage means (38) for storing electricity, connected to the processing means (48, 54), and the method further includes a step (94) for generating, by the processing means (48, 54), a control signal to discharge the electricity contained in the storage means (38), and for sending said signal to the storage means (38) after the detection of the derailment of the vehicle (12).

6. The method according to any one of the preceding claims, wherein the vehicle (12) comprises communication means (40), connected to the processing means (48, 54), and the method further includes a step (96) for elaborating, by the processing means (48, 54), a message indicating the derailment of the vehicle (12), and for sending said message to the communication means (40) after the detection of the derailment of the vehicle (12).

7. A guided ground vehicle (12) able to travel on a track (16), the track (16) comprising an electrical contact rail (18) of the vehicle (12) supplying electricity via the ground, the rail (18) including a plurality of electrical circuits (20), each electrical circuit (20) being connected to at least one electric switching member (28),
the vehicle (12) including a device (32) for managing a derailment of the vehicle (12) and generating means (30) for generating a control signal for controlling the electric switching member(s) (28) connected to one or more electrical circuits (20) positioned across from the ground vehicle (12), to close said electrical circuit (20),
the device (32) including detecting means (46) for detecting the derailment of the ground vehicle (12) and processing means (48, 54) connected to the detecting means (46) and the generating means (30),
the processing means (48, 54) being adapted to deactivate the generating means (30) to inhibit the generation of the control signal, in order to cause the opening of the circuit(s) (20) across from the vehicle (12).

8. The vehicle (12) according to claim 7, wherein the vehicle (12) comprises communication means (40), connected to the processing means (48, 54), and in that the processing means (48, 54) are adapted to elaborate a message indicating the derailment of the vehicle (12) and to send this message to the communication means (40), after the detection of the derailment of the vehicle (12) by the detecting means (46).

9. A set (10) including a plurality of guided ground vehicles (12) able to travel on a track (16) and an installation (14) for managing the travel of each guided ground vehicle (12),
the track (16) comprising an electrical contact rail (18) supplying electricity to the or each vehicle (12) via the ground, the rail (18) including a plurality of electrical circuits (20), each electrical circuit (20) being connected to at least one electric switching member (28),
the installation (14) including a remote communication center (72),
each guided ground vehicle (12) being according to claim 8, and each guided ground vehicle (12) being adapted to communicate with the remote communication center (72) via a data link (66), the communication means (40) of each guided ground vehicle (12) being adapted to send a message indicating the derailment of the vehicle (12) to the remote communication center (72) via the data link (66).

10. The set (10) according to claim 9, wherein the installation (14) further includes a plurality of signaling devices (70), each signaling device (70) having a signaling state from among a plurality of predetermined signaling states, and in that the remote communication center (72) comprises control means (76) for controlling each signaling device (70), the control means (76) being adapted to generate a signal modifying the signaling state of at least one of the signaling devices (70), based on the receipt of a message indicating the derailment of the vehicle (12).

11. The set (10) according to claim 9 or 10, wherein the installation (14) further includes a power supply system (74) for supplying electric power to the electrical circuits (20) of the contact rail (18), and the remote communication center (72) comprises control means (76) for controlling the power supply system (74), the control means (76) being adapted to generate a control signal to stop the power supply system (74), based on the receipt of a message indicating the derailment of the vehicle (12).

12. The set (10) according to any one of claims 9 to 11, wherein the remote communication system (72) comprises location means (80) for locating each guided ground vehicle (12), and transceiver means (78) for sending the location of a guided ground vehicle (12) that has derailed to other guided ground vehicles (12).
